Europäisches Patentamt

European Patent Office

Office européen des brevets

(11) Publication number: **0 461 773 A2**

# EUROPEAN PATENT APPLICATION

(21) Application number: **91304652.0**

(22) Date of filing: **22.05.91**

(51) Int. Cl.5: **G01B 9/02**

(30) Priority: **12.06.90 US 537026**

(43) Date of publication of application:
**18.12.91 Bulletin 91/51**

(84) Designated Contracting States:
**DE FR GB NL**

(71) Applicant: **ZYGO CORPORATION**
**Laurel Brook Road, Post Office Box 448**
**Middlefield Connecticut 06455-0448(US)**

(72) Inventor: **Soobitsky, James A.**
**64 Pokorny Road**
**Higganum, Connecticut 06441(US)**

(74) Representative: **Cline, Roger Ledlie et al**
**EDWARD EVANS & CO. Chancery House**
**53-64 Chancery Lane**
**London WC2A 1SD(GB)**

(54) Linear pitch, and yaw displacement measuring interferometer.

(57) An apparatus, such as an optical measuring system, for the simultaneous measurement of one linear (92) and two angular (91, 191) displacements, in pitch and yaw, of a movable plane mirror (90) affixed to a stage whose relative position and angle are being measured, employs a light source (10), such as a frequency stabilized laser (10) which emits an input beam (12) comprised of two linear orthogonally polarized components; which may or may not be of the same optical frequency. The system includes a polarization beamsplitter (80) having a polarization coating (82), a stationary plane reference mirror (89), and a series of optical components (88, 108, 81, 83, 84, 128, 120, 93, 95, 195, 123, 129, 124, 131) to ultimately provide electrical signals (96, 97, 197) via photo detectors (94, 194, 196), to associated phase meter/accumulators (99, 109, 209), which detect resulting interference between polarization components of the corresponding beams passing through the system resulting from the various displacements of the movable plane mirror (90), to provide outputs (100, 101, 201) which are directly proportional to the linear (92) and angular (91, 191) displacements of the movable plane mirror (90).

FIGURE 1

The present invention relates to apparatus for the simultaneous measurement of one linear and two angular displacements of a plane mirror. More particularly, the invention relates to optical apparatus which is useful for high accuracy linear and angular displacement metrology using interferometry.

High accuracy linear and angular displacement measurements are required in the machine tool industry and in the semiconductor industry. Linear displacement is commonly measured with an interferometer. Angular displacement is commonly measured with either an interferometer or an autocollimator.

There are numerous interferometer configurations which can be used to measure the linear displacement of a plane mirror. The plane mirror interferometer and the differential plane mirror are the two most common; see, for example, S.J. Bennett, A Double-Passed Michelson Interferometer," Opt. Comm. Vol. 4, pp. 428-430, 1972; R. R. Baldwin and G. J. Siddall, "A Double-Pass Attachment for the Linear and Plane Interferometer," Proc. SPIE Vol. 480, pp. 78-83 (May 1984); and G. E. Sommargren, U.S. Patent No. 4,693,605, issued September 15, 1987.

Sommargren, U.S. Patent No. 4,717,250, issued January 5, 1988, describes an angular displacement measuring interferometer.

It is possible to measure simultaneously one linear and two angular displacements of a plane mirror by using either (1) three linear displacement interferometers offset in a plane from each other, (2) two linear displacement interferometers offset from each other and an angular displacement interferometer or an autocollimator, or (3) a linear displacement interferometer and two angular displacement interferometers, or two autocollimators.

However, using three devices, one to measure linear displacement and two to measure either linear displacements or angular displacements has the following disadvantages: (1) complexity because three devices must be installed and aligned, (2) considerable space is needed thereby requiring that the size of the mirror being measured be increased, especially if it moves in a direction in the plane of the mirror, and (3) poor thermal and mechanical stability.

The present invention retains the preferred characteristics of both the linear displacement interferometer and the angular displacement interferometer while avoiding the serious limitations of using three of these devices. In the present invention, one linear and two angular displacements of a plane mirror are measured in a single, compact high stability interferometer. The improvements of the present invention thusly overcome the disadvantages of the prior art and allow the high accuracy, simultaneous measurement of one linear and two angular displacements of a plane mirror, i.e., to a small fraction of a micrometer and of an arc second, respectively, required for precision high speed X-Y stages.

## Summary of the Invention

In accordance with the instant invention, I provide a high stability interferometer system capable of measuring accurately one linear displacement and two angular displacements simultaneously of a movable plane mirror comprising: (1) a light source of a frequency stabilized input beam with two linear orthogonally polarized components which may or may not be of the same frequency; (2) means, most preferably an optical system comprised of a polarization beamsplitter, two quarter-wave phase retardation plates, and a stationary plane reference mirror, and a first retroflector, to reflect one polarization component of the input beam twice from a first position on a movable plane mirror to produce a first output beam and to reflect the other polarization component of the input beam twice from the stationary plane mirror to produce a second output beam; (3) means, the polarization beamsplitter, for recombining the first and second output beams into a third output beam having two orthogonally polarized components in which the phase difference between the two components of the third output beam is related to four times the linear displacement of the movable plane mirror at the first position; (4) means to divide the third output beam into a fourth output beam and fifth and sixth beams which are parallel to, spatially displaced from, traveling in the same direction as the input beam, and have their polarization components rotated by 90 degrees from the third output beam; (5) means, most preferably a first polarizer, for mixing the orthogonal components of the fourth output beam; (6) means, most preferably a first photoelectric detector, to produce a first electrical measurement signal; (7) means, most preferably a first phase meter/accumulator for indicating a first measured phase, the first measured phase being related to four times the linear displacement of the movable plane mirror at the first position; (8) means, most preferably the optical system and a second retroflector to reflect one polarization component of the fifth beam twice from a second position on the movable plane mirror to produce a seventh output beam and to reflect the other polarization component of the fifth beam twice from the stationary plane mirror to produce an eighth output beam; (9) means, the polarization beamsplitter, for recombining the seventh and eighth output beams into a ninth output beam having two orthogonally polarized components in which the phase difference between two components of the ninth output beam is related to the four times the difference of the linear displacements of the movable plane mirror at the first and second positions; (10) means, most preferably a second polarizer, for mixing the orthogonal components of the ninth output beam; (11) means, most preferably a second photoelectric detector, to produce a second electrical measurement signal; (12) means, most preferably a second phase meter/accumulator for indicating a second measured phase, the second measured phase being related to the angular displacement of the movable plane mirror; (13) means, most preferably the optical system and a third retroflector to reflect one polarization component of the sixth beam twice from a third position on the movable plane mirror to produce a tenth output beam and to reflect the other polarization component of the sixth beam twice from the stationary plane mirror to produce an eleventh output beam; (14) means, the polarization beamsplitter for recombining the tenth and eleventh output beams into a twelfth output beam having two orthogonally polarized components in which the phase difference between two components of the twelfth output beam is related to four times the difference of the linear displacements of the movable plane mirror at the first and third positions; (15) means, most preferably a third polarizer, for mixing the orthogonal components of the twelfth output beam; (16) means, most preferably a third photoelectric detector, to produce a third electrical measurement signal; and (17) means, most preferably a third phase meter/accumulator for indicating a third measured phase, the third measured phase being related to the angular displacement of the movable plane mirror.

The Drawings

In the drawings,
Figure 1 depicts in schematic form a preferred embodiment of the instant invention to simultaneously measure linear displacement, yaw and pitch angular displacement;

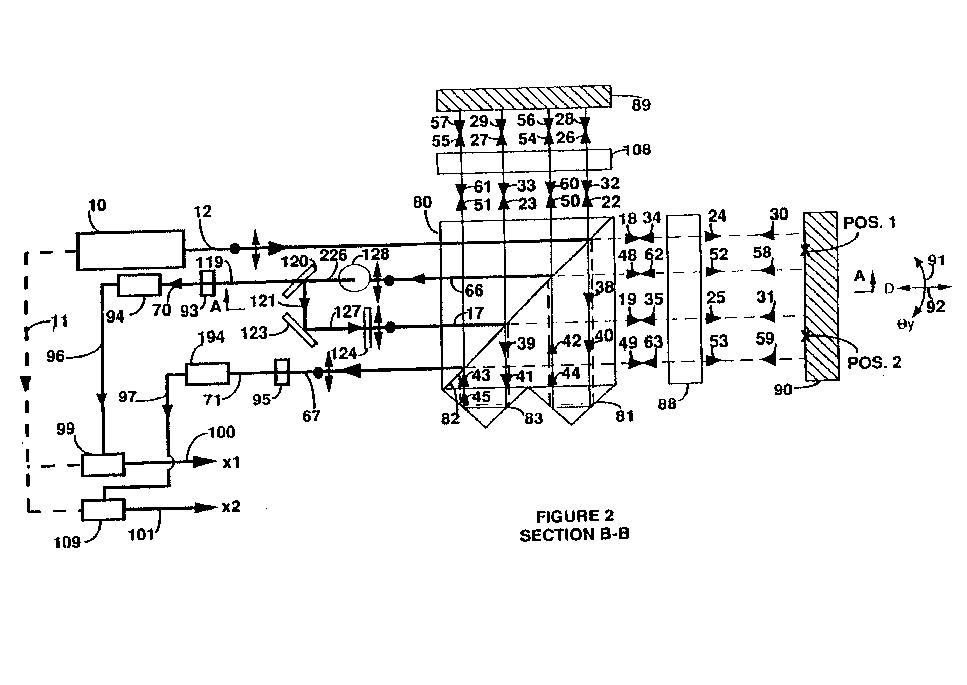

Figure 2 depicts a first section of the embodiment of the invention shown on Fig. 1 taken along line B-B;

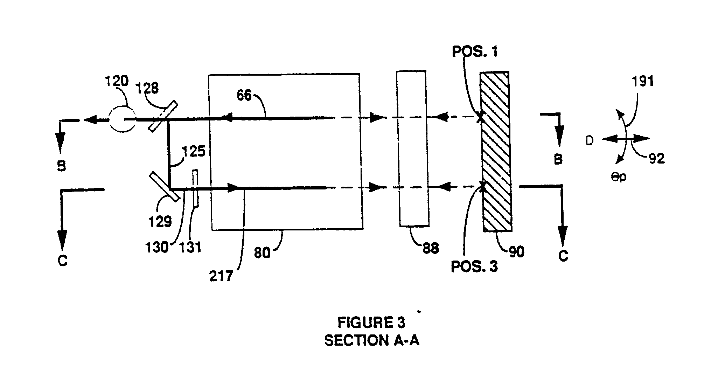

Figure 3 depicts a second section of the embodiment of the invention shown on Fig. 1 taken along line A-A;

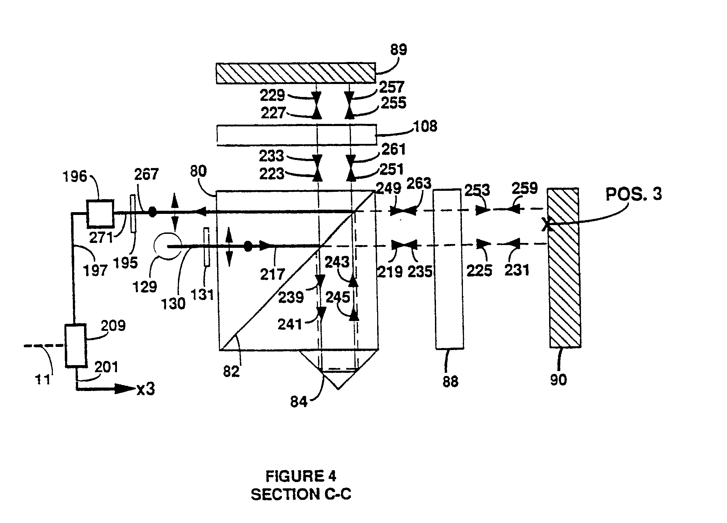

Figure 4 depicts a third section of the embodiment of the invention shown in Fig. 1 taken along line C-C.

Detailed Description of the Invention

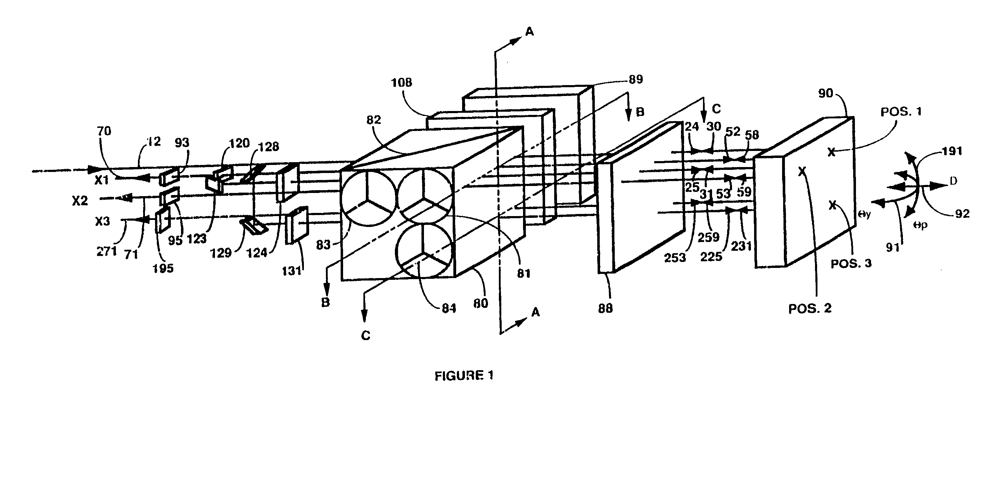

Figure 1 depicts in schematic form one preferred embodiment of the instant invention. While the apparatus has application for a wide range of radiation sources, the following description is taken by way of example with respect to an optical measuring system. Light source (10), which most preferably uses a frequency stabilized laser, emits input beam (12) which is comprised of two linear orthogonal polarized components, as indicated by the dot and arrow, which may or may not be of the same optical frequency. If the frequencies are the same, see for example, Downs, et al., U.S. Patent No. 4,360,271, issued November 23, 1982. If the frequencies are different, see for example, Bagley, et al., U.S. Patent No. 3,458,259, issued July 26, 1969, and commonly owned U.S. Patent No. 4,688,940 issued August 25, 1987, in which source (10) would provide an electrical reference signal (11), shown by the dotted lines, which would correspond to the frequency difference between the two stabilized frequencies. No such reference signal (11) is provided when the two orthogonally polarized components comprising input beam (12) are of the same frequency.

Beam (12) enters polarization beamsplitter (80) and is incident on polarization coating (82). The polarized beam component in the plane of the figure, denoted by the arrow, is transmitted by coating (82) as beam (18) while the polarized beam component perpendicular to the plane of the figure, denoted by the dot, is reflected by polarization coating (82) as beam (22). Beams (18) and (22) pass through quarter-wave phase retardation plates (88) and (108), respectively, and are converted into circularly polarized beams (24) and (26), respectively. Beam (26) is reflected from stationary plane mirror (89) as beam (28) while beam (24) is reflected from movable plane mirror (90) affixed to the stage (not shown) whose relative position and angle is being measured, as beam (30). Beams (30) and (28) pass back through quarter-wave phase retardation plates (88) and (108), respectively, and are converted back into linearly polarized beams (32) and (34), respectively, which are orthogonally polarized to beams (22) and (18) respectively. Beams (34) and (32) are incident on polarization coating (82) of polarization beamsplitter (80). Because their polarizations have been rotated 90 degrees, beam (32) is transmitted as beam (38) and beam (34) is reflected as beam (40). Beams (38) and (40) are reflected by retroreflector (81) as beams (42) and (44), respectively. Beams (42) and (44) travel parallel to beams (38) and (40), respectively, by means of properties of the retroreflector (81). Beams (42) and (44) are incident on polarization coating (82) of polarization beamsplitter (80). Beam (42) is transmitted as beam (50) and beam (44) is reflected as beam (48). Beams (48) and (50) pass through quarter-wave phase retardation plates (88) and (108), respectively, and are converted into circularly polarized beams (52) and (54), respectively. Beam (54) is reflected from stationary reference mirror (89) as beam (56) while beam (52) is reflected from movable mirror (90) as beam (58). Beams (58) and (56) pass back through quarter-wave phase retardation plates (88) and (108), respectively, and are converted back into linearly polarized beams (60) and (62), respectively, which now have the same polarization as beams (22) and (18), respectively. Beams (60) and (62) are incident on polarization coating (82) of polarization beamsplitter (80). Beam (62) is transmitted and beam (60) is reflected so that they are recombined by polarization beamsplitter (80) to form beam (66). Beam (66) has two orthogonal polarization components. The relative phase between these two polarization components depends on the optical path length traversed by each polarization component. Translation of movable plane mirror (90), as indicated by arrow (92), causes the relative phase to change. This phase change is directly proportional to twice the linear displacement of movable plane mirror (90) at position 1. Position 1 is the point equidistant from where beams (24) and (52) strike mirror (90). Beam (66) is incident on 33/67 nonpolarization beamsplitter (128). One third of beam (66) is reflected as beam (125) and two thirds are transmitted as beam (226). Beam (226) is incident on 50/50 non-polarization beamsplitter (120). One half of beam (226) is reflected as beam (121) and one half is transmitted as beam (119). Beam (119) passes through polarizer (93), oriented at 45 degrees to each polarization component, which mixes the two polarization components in beam (119) to give beam (70). The interference between the two polarization components is detected by photodetector (94) producing electrical signal (96). Phase meter/accumulator (99) extracts the phase change from electrical signal (96). When the two polarization components of beam (12) are of the same optical frequency, reference signal (11) is not required and phase meter/accumulator (99) extracts the phase change from signal (96) as described in aforementioned U.S. Patent No. 4,360,271. However, when the two polarization components of beam (12) are of different frequencies, additional sinusoidal electrical reference (11) equal in frequency to the difference between the two optical frequencies is required and phase meter/accumulator (99) extracts the phase change from signal (96) as described in aforementioned U.S. Patent No. 4,688,940. In either event, phase meter/accumulator (99) provides output (100) which is directly proportional to the linear displacement (92) of movable mirror (90) at position 1 in Figure 1.

Beam (121) is reflected by mirror (123) to produce beam (127) which is parallel to, but offset from, input beam (12). Beam (127) then passes through half-wave phase retardation plate (124) to produce beam (17). Half-wave phase retardation plate (124) rotates the polarization components in beam (127) by 90 degrees so that the polarization components in beam (17) have been interchanged with respect to the polarization components of beam (12). Beam (17) enters polarization beamsplitter (80) and is incident on polarization coating (82). The polarized beam component in the plane of the figure, denoted by the arrow, is transmitted by coating (82) as beam (19) while the polarized beam component perpendicular to the plane of the figure, denoted by the dot is reflected by coating (82) as beam (23). Beams (19) and (23) pass through quarter-wave phase retardation plates (88) and (108), respectively, and are converted into circularly polarized beams (25) and (27), respectively. Beam (27) is reflected from stationary mirror (89) as beam (29) while beam (25) is reflected by movable plane mirror (90), affixed to the stage (not shown) whose relative position and angle are being measured, as beam (31). Beams (31) and (29) pass back through quarter-wave phase retardation plates (88) and (108), respectively, and are converted back into linearly polarized beams (35) and (33), respectively, which are orthogonally polarized to beams (19) and (23), respectively. Beams (35) and (33) are incident on polarization coating (82) of polarization beamsplitter (80). Because their polarizations have been rotated 90 degrees, beam (33) is transmitted as beam (39) and beam (35) is reflected as beam (41). Beams (39) and (41) are reflected by retroreflector (83) as beams (43) and (45) respectively. Beams (43) and (45) travel parallel to beams (39) and (41), respectively, by means of the properties of retroreflector (83). Beams (43) and (45) are incident on polarization coating (82) of the polarization beamsplitter (80). Beam (43) is transmitted as beam (51) and beam (45) is reflected as beam (49). Beams (49) and (51) pass through quarter-wave phase retardation plates (88) and (108), respectively, and are converted into circularly polarized beams (53) and (55), respectively. Beams (53) and (55) are reflected from movable plane mirror (90) and stationary plane mirror (89) as beams (59) and (57), respectively. Beams (59) and (57) pass back through quarter-wave phase retardation plates (88) and (108), respectively, and are converted back to linearly polarized beams (63) and (61), respectively, which now have the same polarization as beams (19) and (23), respectively. Beams (63) and (61) are incident on polarization coating (82) of polarization beamsplitter (80). Beam (63) is transmitted and beam (61) is reflected so that they are recombined by polarization beamsplitter (80) to form beam (67). Beam (67) has two orthogonal polarization components. The relative phase between these two polarization components depends on the path length traversed by each polarization component. This phase change is directly proportional to the angular displacement (91) of movable plane mirror (90) between points 1 and 2 and is measured by passing beam (67) through polarizer (95), oriented at 45 degrees to each polarization component, which mixes the two polarization components in beam (67) to give beam (71). The interference between the two polarization components is detected by photodetector (194) producing electrical signal (97). Phase meter/accumulator (109) extracts the phase change from electrical signal (97). When the two polarization components of beam (121) are of the same optical frequency, reference signal (11) is not required and phase meter/accumulator (109) extracts the phase change from signal (97) as described in aforementioned U.S. Patent No. 4,360,271. However, when the two polarization components of beam (12) are of different frequencies, additional sinusoidal electrical reference (11) equal in frequency to the difference between the two optical frequencies is required and phase meter/accumulator (109) extracts the phase change from signal (97) as described in aforementioned U.S. Patent No. 4,688,940. In either event, phase meter/accumulator (109) provides output (101) which is directly proportional to the angular displacement (91) of movable plane mirror (90) about positions 1 and 2.

Beam (125) is reflected by mirror (129) to produce beam (130) which is parallel to, but offset from, input beam (12). Beam (130) then passes through half-wave phase retardation plate (131) to produce beam (217). Half-wave phase retardation plate (131) rotates the polarization components in beam (130) by 90 degrees so that the polarization components in beam (217) have been interchanged with respect to the polarization components of beam (12). Beam (217) enters polarization beamsplitter (80) and is incident on polarization coating (82). The polarized beam component in the plane of the figure, denoted by the arrow, is transmitted by coating (82) as beam (219) while the polarized beam component perpendicular to the plane of the figure, denoted by the dot, is reflected by coating (82) as beam (223). Beams (219) and (223) pass through quarter-wave phase retardation plates (88) and (108) respectively, and are converted into circularly polarized beams (225) and (227), respectively. Beam (227) is reflected from stationary mirror (89) as beam (229) while beam (225) is reflected by movable plane mirror (90), affixed to the stage (not shown) whose relative position and angle are being measured, as beam (231). Beams (231) and (229) pass back through quarter-wave phase retardation plates (88) and (108), respectively, and are converted back into linearly polarized beams (235) and (223), respectively, which are orthogonally polarized to beams (219) and (223), respectively. Beams (235) and (233) are incident on polarization coating (82) of polarization beamsplitter (80). Because their polarizations have been rotated 90 degrees, beam (233) is transmitted as beam (239) and beam (235) is reflected as beam (241). Beams (239) and (241) are reflected by retroreflector (84) as beams (243) and (245) respectively. Beams (243) and (245) travel parallel to beams (239) and (241), respectively, by means of the properties of retroreflector (84). Beams (243) and (245) are incident on polarization coating (82) of the polarization beamsplitter (80). Beam (243) is transmitted as beam (251) and beam (245) is reflected as beam (249). Beams (249) and (251) pass through quarter-wave phase retardation plates (88) and (108), respectively, and are converted into circularly polarized beams (253) and (255), respectively. Beams (253) and (255) are reflected from movable plane mirror (90) and stationary plane mirror (89) as beams (259) and (257), respectively. Beams (259) and (257) pass back through quarter-wave phase retardation plates (88) and (108), respectively, and are converted back to linearly polarized beams (263) and (261), respectively, which now have the same polarization as beams (219) and (223), respectively. Beams (263) and (261) are incident on polarization coating (82) of polarization beamsplitter (80). Beam (263) is transmitted and beam (261) is reflected so that they are recombined by polarization beamsplitter (80) to form beam (267). Beam (267) has two orthogonal polarization components. The relative phase between these two polarization components depends on the path length traversed by each polarization component. This phase change is directly proportional to the angular displacement (191) of movable plane mirror (90) between points 1 and 3 and is measured by passing beam (267) through polarizer (195), oriented at 45 degrees to each polarization component, which mixes the two polarization components in beam (267) to give beam (271). The interference between the two polarization components is detected by photodetector (196) producing electrical signal (197). Phase meter/accumulator (209) extracts the phase change from electrical signal (197). When the two polarization components of beam (12) are of the same optical frequency, reference signal (11) is not required and phase meter/accumulator (209) extracts the phase change from signal (197) as described in aforementioned U.S. Patent No. 4,360,271. However, when the two polarization components of beam (12) are of different frequencies, additional sinusoidal electrical reference (11) equal in frequency to the difference between the two optical frequencies is required and phase meter/accumulator (209) extracts the phase change from signal (197) as described in aforementioned U.S. Patent No. 4,688,940. In either event, phase meter/accumulator (209) provides output (201) which is directly proportional to the angular displacement (91) of movable plane mirror (90) about positions 1 and 3.

The principal advantages of the instant invention are: (1) a single device provides the simultaneous measurement of both linear and angular displacement in pitch and yaw, and (2) it is compact.

Although the invention has been described with respect to a light source which emits two stabilized; orthogonally polarized beams of different frequencies, it can be used equally well with the input beam orthogonally polarized components being of the same or different frequencies. When the optical means comprises a polarization beam splitter, this beamsplitter may comprise the means for re-combining the first and second output beams into the third output beam and it may also comprise the means for re-combining the seventh and eighth output beams into the ninth output beam. It may also comprise the means for re-combining the tenth and eleventh output beams into the twelfth output beam. The optical means may further comprise two quarter-wave phase retardation plates and a first retroreflector.

When the means for indicating the first measured phase comprises a phase meter/accumulator, it may further comprise means for mixing the orthogonal components of the fourth output beam. Similarly, when the means for indicating the second measured phase comprise a phase meter/accumulator, it may further comprise means for mixing the orthogonal components of the ninth output beam. Similarly, when the means for indicating the third measured phase comprises a phase meter/accumulator, it may further comprise means for mixing the orthogonal components of the twelfth output beam. In any of these case, the mixing means may comprise a polarizer. When the indicating means comprises such mixing means, the indicating means may further comprise means for detecting the interference between the two polarization components of the mixed fourth, ninth or twelfth output beam as appropriate or producing an electrical measurement signal to the phase meter/accumulator and in these cases, the detecting means may comprise a photoelectric detector.

## Claims

1. An interferometer for measuring linear pitch and yaw displacement of a movable plane mirror associated with a stage whose relative position and angle are to be measured, said interferometer comprising:

a light source for providing on input beam comprising two linear orthogonally polarized components;

optical means, comprising stationary plane mirror means for reflecting one of said input beam orthogonally polarized components twice from a first position on said movable plane mirror for producing a first output beam and for reflecting the other of said input beam orthogonally polarized components twice from said stationary plane mirror means for producing a second output beam;

means for recombining said first and second output beams into a third output beam comprising two orthogonally polarized components having a phase difference therebetween related to four times a linear displacement of said movable plane mirror at said first position;

means for dividing said third output beam into a fourth output beam and fifth and sixth beams which are parallel to, spatially displaced from, traveling in the same direction as said input beam, and have associated polarization components rotated by 90 degrees from said third output beam, said fourth output beam having polarization components;

means for indicating a first measured phase from said fourth output beam, said first measured phase being related to four times said linear displacement of said movable plane mirror at said first position;

means for reflecting one polarization component of said fifth beam twice from a second position on said movable plane mirror to produce a seventh output beam and for reflecting the other polarization component of said fifth beam twice from said stationary plane mirror for producing an eighth output beam;

means for recombining said seventh and eighth output beams into a ninth output beam comprising two orthogonally polarized components having a phase difference therebetween related to four times the difference of said linear displacements of said movable plane mirror at said first and second positions;

means for indicating a second measured phase from said ninth output beam, said second measured phase being related to angular displacement of said movable plane mirror;

means for reflecting one polarization component of said sixth beam twice from a third position on said movable plane mirror for producing a tenth output beam and for reflecting the other polarization component of said sixth beam twice from said stationary plane reference mirror for producing an eleventh output beam;

means for recombining said tenth and eleventh output beams into a twelfth output beam comprising two outhogonally polarized components having a phase difference therebetween related to four times the difference of said movable plane mirror at said first and third positions; and

means for indicating a third measured phase from said twelfth output beam, said third measured phase being related to said angular displacement of said movable plane mirror; whereby, high accuracy linear and angular displacement measurements may be accomplished in a single interferometer.

2. An interferometer in accordance with claim 1 wherein said light source comprises a frequency stabilized light source.

3. An interferometer in accordance with Claim 1 wherein said light source comprises a laser.

4. An interferometer in accordance with Claim 1 wherein said optical means further comprises a polarization beamsplitter.

5. An interferometer in accordance with Claim 1 wherein said means for indicating said first measured phase comprises a phase meter/accumulator.

6. An interferometer in accordance with Claim 1 wherein said means for indicating said second measured phase comprises a phase meter/accumulator.

7. An interferometer in accordance with Claim 1 wherein said means for indicating said third measured phase comprises a phase meter/accumulator.

8. An interferometer in accordance with Claim 1 wherein said means for reflecting said polarization components of said fifth beam twice to produce said seventh and eighth output beams comprises said optical means and a retroreflector.

9. An interferometer in accordance with Claim 1 wherein said means for reflecting said polarization components of said sixth beam twice to produce said tenth and eleventh output beams comprises said optical means and a reflector.

FIGURE 1

EP 0 461 773 A2

FIGURE 2
SECTION B-B

**FIGURE 3**
**SECTION A-A**

**FIGURE 4**
**SECTION C-C**